# EUROPEAN PATENT APPLICATION

(11) **EP 4 141 339 A1**
(43) Date of publication of application: **01.03.2023**
(21) Application number: 21792867.0
(22) Date of filing: 05.02.2021
(51) Int. Cl.: F24F 11/64, F24F 11/89, F24F 13/24

(54) **MULTI-SPLIT AIR CONDITIONING SYSTEM, AND REFRIGERANT FLOW CONTROL METHOD THEREFOR**

(30) Priority: 22.04.2020 CN 202010323064
(71) Applicant: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: SONG, Deyue, Qingdao, Shandong 266101 (CN); WANG, Haisheng, Qingdao, Shandong 266101 (CN); ZHANG, Ming, Qingdao, Shandong 266101 (CN)
(74) Representative: Budde Schou A/S
(86) International application number: PCT/CN2021/075562
(87) International publication number: WO 2021/212966

(57) **Abstract**

Disclosed is a refrigerant flow control method for a multi-split air conditioning system, the method comprising: when a multi-split air conditioning system is started and operates in a heating mode, acquiring a refrigerant outlet side temperature of an indoor heat exchanger (EHᵢ₁) of an indoor unit which is in a normal heating state, and a refrigerant outlet side temperature of an indoor heat exchanger (EHᵢ₂) of an indoor unit which is in a standby/shutdown state; comparing the refrigerant outlet side temperature of the indoor heat exchanger (EHᵢ₁) of the indoor unit in the normal heating state with the refrigerant outlet side temperature of the indoor heat exchanger (EHᵢ₂) of the indoor unit in the standby/shutdown state; and selectively increasing or reducing the opening degree of a bypass expansion valve (XVᵢ₂) of the indoor unit in the standby/shutdown state according to a comparison result. Further disclosed is a multi-split air conditioning system. The problems whereby when the multi-split air conditioning system is started and operates in a heating mode, the amount of refrigerant in an indoor unit in a normal heating state is insufficient, and the amount of noise of an indoor unit in the standby/shutdown state is large can be solved.

## Description

### FIELD OF THE INVENTION

The present disclosure belongs to the technical field of air conditioning, and specifically provide a multi-connection air conditioning system and a method for controlling a refrigerant flow of a multi-connection air conditioning system.

### BACKGROUND OF THE INVENTION

A multi-connection air conditioning system includes an outdoor unit and a plurality of indoor units. When the multi-connection air conditioning system is operating in a heating mode, if some of the indoor units are in a standby/shutdown state, in order to ensure that there is sufficient refrigerant circulating in the system so that not all the refrigerant is stored in an indoor heat exchanger of the indoor unit on a high pressure side, an electronic expansion valve of the standby/shutdown indoor unit will be maintained at a specific opening degree. As a result, when more refrigerant is required for other turned-on indoor units, a heating effect of the turned-on indoor units will be deteriorated due to the bypass of the standby/shutdown indoor units. Similarly, since the opening degree of the electronic expansion valves of the shutdown/standby indoor units cannot be adjusted, the noise of the standby/shutdown indoor units will be overly large, which eventually leads to user complaints.

In view of the above, those skilled in the art need to fundamentally solve the problems that the amount of refrigerant in normally heating indoor units of a multi-connection air conditioning system operating in a heating mode is insufficient, and the standby/shutdown indoor units are too noisy.

### SUMMARY OF THE INVENTION

In order to fundamentally solve the problems that the amount of refrigerant in normally heating indoor units of a multi-connection air conditioning system operating in a heating mode is insufficient and the standby/shutdown indoor units are too noisy, an aspect of the present disclosure provides a method for controlling a refrigerant flow of a multi-connection air conditioning system.

The multi-connection air conditioning system includes an outdoor unit and a plurality of indoor units, and the method for controlling the refrigerant flow includes: when the multi-connection air conditioning system is turned on and operates in a heating mode, acquiring a refrigerant outlet side temperature T_{zr} of an indoor heat exchanger of a normally heating indoor unit and a refrigerant outlet side temperature T_{gj} of an indoor heat exchanger of a standby/shutdown indoor unit; comparing the refrigerant outlet side temperature T_{zr} of the indoor heat exchanger of the normally heating indoor unit with the refrigerant outlet side temperature T_{gj} of the indoor heat exchanger of the standby/shutdown indoor unit; and selectively increasing or decreasing an opening degree of a bypass expansion valve of the standby/shutdown indoor unit according to a comparison result.

In a preferred solution of the above method for controlling the refrigerant flow, the step of "selectively increasing or decreasing an opening degree of a bypass expansion valve of the standby/shutdown indoor unit" includes: if the refrigerant outlet side temperature T_{zr} of the indoor heat exchanger of the normally heating indoor unit is lower than the refrigerant outlet side temperature T_{gj} of the indoor heat exchanger of the standby/shutdown indoor unit and the difference reaches a first set threshold K₁, then decreasing the opening degree of the bypass expansion valve of the standby/shutdown indoor unit, and returning to the step of acquiring T_{zr} and T_{gj}.

In a preferred solution of the above method for controlling the refrigerant flow, the step of "decreasing the opening degree of the bypass expansion valve of the standby/shutdown indoor unit" specifically includes: acquiring a current opening degree Pi of the bypass expansion valve of the standby/shutdown indoor unit; judging whether the current opening degree Pᵢ of the bypass expansion valve is larger than a minimum allowable opening degree Pₘᵢₙ; and decreasing the opening degree of the bypass expansion valve if the current opening degree Pi is larger than the minimum allowable opening degree Pₘᵢₙ.

In a preferred solution of the above method for controlling the refrigerant flow, the step of "decreasing the opening degree of the bypass expansion valve of the standby/shutdown indoor unit" further includes: if the current opening degree Pi is smaller than the minimum allowable opening degree Pₘᵢₙ, then adjusting the opening degree of the bypass expansion valve to the minimum allowable opening degree Pₘᵢₙ, and returning to the step of acquiring T_{zr} and T_{gj}; and if the current opening degree Pi is equal to the minimum allowable opening degree Pₘᵢₙ, then maintaining the opening degree of the bypass expansion valve at the minimum allowable opening degree Pₘᵢₙ, and returning to the step of acquiring T_{zr} and T_{gj}.

In a preferred solution of the above method for controlling the refrigerant flow, the step of "selectively increasing or decreasing an opening degree of a bypass expansion valve of the standby/shutdown indoor unit" includes: if the refrigerant outlet side temperature T_{zr} of the indoor heat exchanger of the normally heating indoor unit is higher than the refrigerant outlet side temperature T_{gj} of the indoor heat exchanger of the standby/shutdown indoor unit and the difference reaches a second set threshold K₂, then increasing the opening degree of the bypass expansion valve of the standby/shutdown indoor unit, and returning to the step of acquiring T_{zr} and T_{gj}.

In a preferred solution of the above method for controlling the refrigerant flow, a working state of the indoor unit is judged in the method for controlling the refrigerant flow in the following way: judging whether the indoor unit is turned on; acquiring an ambient temperature of the turned-on indoor unit if the indoor unit is turned on; otherwise, determining that the current state of the indoor unit is turned off; judging whether a target temperature of the turned-on indoor unit is higher than the ambient temperature; if the target temperature is higher than the ambient temperature, then determining that the current state of the indoor unit is normal heating; and if the target temperature is lower than or equal to the ambient temperature, then determining that the current state of the indoor unit is standby.

In a preferred solution of the above method for controlling the refrigerant flow, whether the multi-connection air conditioning system is turned on is judged in the method for controlling the refrigerant flow in the following way: acquiring a frequency of a compressor of the multi-connection air conditioning system; judging whether the frequency of the compressor is larger than zero; and if the frequency of the compressor is larger than zero, then determining that the multi-connection air conditioning system is turned on.

In a preferred solution of the above method for controlling the refrigerant flow, if the frequency of the compressor is equal to zero, then the frequency of the compressor of the multi-connection air conditioning system is acquired again and it is judged whether it is larger than zero.

In a preferred solution of the above method for controlling the refrigerant flow, the method for controlling the refrigerant flow of the multi-connection air conditioning system further includes: keeping the bypass expansion valve operating at the current opening degree for a preset duration before returning to the step of acquiring T_{zr} and T_{gj}.

In the method for controlling the refrigerant flow of the multi-connection air conditioning system provided by the present disclosure, in a case where the multi-connection air conditioning system is turned on and operates in the heating mode, firstly, the refrigerant outlet side temperature of the indoor heat exchanger of the normally heating indoor unit and the refrigerant outlet side temperature of the indoor heat exchanger of the standby/shutdown indoor unit are acquired; then magnitudes of the two are compared; and finally, the opening degree of the bypass expansion valve of the standby/shutdown indoor unit is selectively increased or decreased according to a comparison result, so that the amount of refrigerant in each indoor unit is dynamically adjusted, ensuring a sufficient amount of refrigerant in the normally heating indoor units, and therefore improving a heating efficiency of the multi-connection air conditioning system.

In addition, in the method for controlling the refrigerant flow, refrigerant flow distribution in the system is dynamically controlled, so that the opening degree of the bypass expansion valve of the standby/shutdown indoor unit can be controlled to be within in a more reasonable range. As such, the noise of the standby/shutdown indoor unit can be reduced to a certain extent, so that the user experience can be improved.

In another aspect, the present disclosure also provides a multi-connection air conditioning system, which includes a controller, and the controller is configured to be capable of executing the above method for controlling the refrigerant flow. It should be noted that the multi-connection air conditioning system has all the technical effects of the above method for controlling the refrigerant flow of the multi-connection air conditioning system.

### BRIEF DESCRIPTION OF THE DRAWINGS

FIG. 1 is a schematic structural view of a multi-connection air conditioning system provided by the present disclosure.
FIG. 2 is a flowchart illustrating main steps of a method for controlling a refrigerant flow of a multi-connection air conditioning system provided by the present disclosure.
FIG. 3 is a flowchart illustrating detailed steps of the method for controlling the refrigerant flow of the multi-connection air conditioning system provided by the present disclosure.

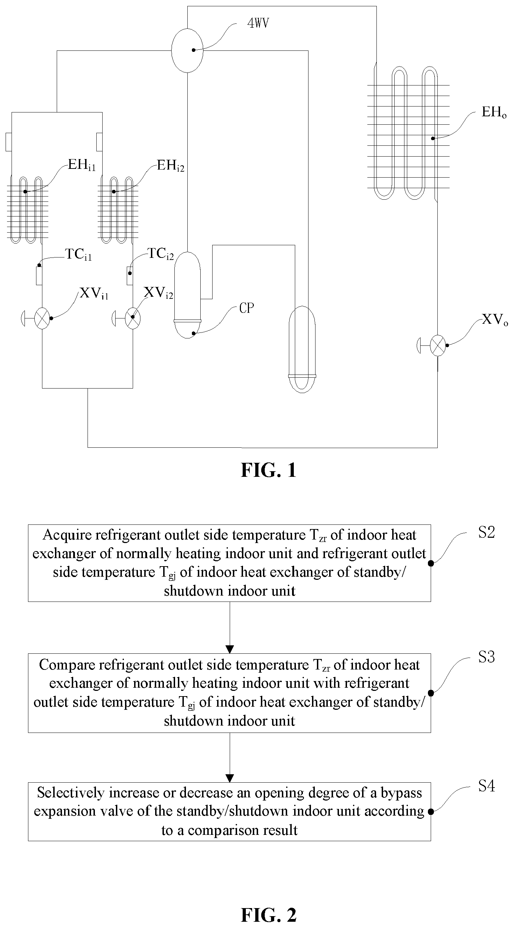

The correspondences between names of various components and their respective reference signs in FIG. 1 are:
CP: compressor; 4WV: four-way valve; EHₒ: outdoor heat exchanger; EHᵢ₁: first indoor heat exchanger; EHᵢ₂: second indoor heat exchanger; XVₒ: main expansion valve; XVᵢ₁: first bypass expansion valve; XVᵢ₂: second bypass expansion valve; TCᵢ₁: first temperature sensor; TCᵢ₂: second temperature sensor.

### DETAILED DESCRIPTION OF THE EMBODIMENT(S) OF THE INVENTION

Preferred embodiments of the present disclosure will be described below with reference to the accompanying drawings. It should be understood by those skilled in the art that these embodiments are only used to explain the technical principle of the present disclosure, and are not intended to limit the scope of protection of the present disclosure.

In the description of the present application, a "controller" may include hardware, software, or a combination of the two. Correspondingly, the method of the present disclosure may be implemented in the form of software, and may also be implemented in a combination of software and hardware. Furthermore, terms "first", "second" and the like are used for descriptive purposes only and should not be construed as indicating or implying relative importance.

It should be noted that the multi-connection air conditioning system of the present disclosure includes an outdoor unit, and a plurality of indoor units arranged in parallel with each other. The quantifier "plurality" of the plurality of indoor units includes two, three, four and other integers. In addition, the number of the outdoor units in the multi-connection air conditioning system of the present disclosure is not limited to one, but may be plural.

In addition, the refrigerant inlet side and refrigerant outlet side mentioned herein are defined with reference to a flow direction of internal refrigerant when the multi-connection air conditioning system is operating in a heating mode. For example, if the refrigerant of the multi-connection air conditioning system flows into the indoor heat exchanger from a high pressure side of the compressor via one port of the indoor heat exchanger, and flows out from another port after heat exchange with an external environment in the indoor heat exchanger, then said another port from which the refrigerant flows out is the refrigerant outlet side of the indoor heat exchanger. It can be understood that this setting does not limit the scope of protection of the present disclosure.

Next, a typical structure and working principle of a multi-connection air conditioning system will be described in detail in connection with the example of FIG. 1. Referring to FIG. 1, the multi-connection air conditioning system includes an outdoor unit, a first indoor unit and a second indoor unit; the outdoor unit includes an outdoor heat exchanger EHₒ, and the first indoor unit and the second indoor unit are arranged in parallel with each other; the first indoor unit includes a first indoor heat exchanger EHᵢ₁ and a first bypass expansion valve XVᵢ₁, and the first bypass expansion valve XVᵢ₁ is connected in series with a refrigerant outlet side of the first indoor heat exchanger EHᵢ₁ and is configured to adjust a refrigerant flow of a bypass where the first indoor heat exchanger EHᵢ₁ is located; similarly, the second indoor unit includes a second indoor heat exchanger EHᵢ₂ and a second bypass expansion valve XVᵢ₂, and the second bypass expansion valve XVᵢ₂ is connected in series with a refrigerant outlet side of the second indoor heat exchanger EHᵢ₂ and is configured to adjust a refrigerant flow of a bypass where the second indoor heat exchanger EHᵢ₂ is located.

This multi-connection air conditioning system further includes a compressor CP, a four-way valve 4WV, and a main path expansion valve XVₒ; the main path expansion valve XVₒ is connected in series with a refrigerant inlet side of the outdoor heat exchanger EHₒ; the compressor CP, the outdoor unit, as well as the first indoor unit and the second indoor unit arranged in parallel are connected through the four-way valve 4WV to form a heat exchange circulation loop. By adjusting a working position of the four-way valve 4WV, a flow direction of the refrigerant in the multi-connection air conditioning system can be adjusted, and then a cooling mode and a heating mode of the air conditioning system can be switched.

In detail, the four-way valve 4WV has a first port, a second port, a third port, and a fourth port; the first port communicates with a high-pressure side port of the compressor CP, the second port communicates with one port of the outdoor heat exchanger EHₒ, the third port communicates with one ports of both the first indoor heat exchanger EHᵢ₁ and the second indoor heat exchanger EHᵢ₂, and the fourth port communicates with a low-pressure side port of the compressor CP. The other port of the outdoor heat exchanger EHₒ communicates with one ports of both the first bypass expansion valve XVᵢ₁ and the second bypass expansion valve XVᵢ₂ through the main path expansion valve XVₒ.

When the four-way valve 4WV is in a first working position, the first port and the second port are conducted, the third port and the fourth port are conducted, and the multi-connection air conditioning system is in the cooling mode. The working principle of the cooling mode of the multi-connection air conditioning system is described as follows: first, the compressor CP compresses a low-temperature and low-pressure refrigerant vapor into a high-temperature and high-pressure superheated vapor; then, the refrigerant flows into the outdoor heat exchanger EHₒ through the four-way valve 4WV, and exchanges heat in the outdoor heat exchanger EHₒ to transfer the heat to the air, and the refrigerant is condensed into a high-temperature and high-pressure liquid; then, the refrigerant flowing through the main path expansion valve XVₒ becomes saturated after being throttled; then, the saturated refrigerant flows into the first indoor heat exchanger EHᵢ₁ and the second indoor heat exchanger EHᵢ₂ respectively after being split, and evaporates and absorbs heat in the first indoor heat exchanger EHᵢ₁ and the second indoor heat exchanger EHᵢ₂ to become a low-temperature superheated vapor; finally, the low-temperature superheated refrigerant is suctioned into the compressor CP through the four-way valve 4WV after confluence. The multi-connection air conditioning system performs cooling circularly and repeatedly, dissipating heat into the outdoor air.

When the four-way valve 4WV is switched to the second working position from the first working position, the first port and the third port are conducted, the second port and the fourth port are conducted, and the multi-connection air conditioning system is switched to the heating mode from the cooling mode.

The working principle of the heating mode of the multi-connection air conditioning system is described as follows: first, the compressor CP compresses a low-temperature and low-pressure refrigerant vapor into a high-temperature and high-pressure superheated vapor; second, the refrigerant flows into the first indoor heat exchanger EHᵢ₁ and the second indoor heat exchanger EHᵢ₂ respectively after passing through the four-way valve 4WV, and exchanges heat in the first indoor heat exchanger EHᵢ₁ and the second indoor heat exchanger EHᵢ₂ to transfer the heat to the air, and the refrigerant is condensed into a high-temperature and high-pressure liquid; then, after confluence, the refrigerant flowing through the main path expansion valve XVₒ becomes saturated after being throttled; then, the saturated refrigerant flows into the outdoor heat exchanger EHₒ, and evaporates and absorbs heat in the outdoor heat exchanger EHₒ to become a low-temperature superheated vapor; finally, the low-temperature superheated refrigerant is suctioned into the compressor CP through the four-way valve 4WV. The multi-connection air conditioning system performs heating circularly and repeatedly, absorbing heat from the outdoor air.

When the multi-connection air conditioning system operates in the heating mode, according to the different actual needs of users, the current working states of the two indoor units may not be the same; for example, when a temperature of the environment where the first indoor unit is located has reached a target temperature set by the user, the current working state of the first indoor unit is switched from normal heating to standby. However, at this time, a temperature of the environment where the second indoor unit is located may not yet reach the target temperature set by the user, and the second indoor unit is still in the normal heating state at this time.

As described in the "BACKGROUND OF THE INVENTION", when the multi-connection air conditioning system is operating in the heating mode, if some of the indoor units are in the standby/shutdown state, in order to ensure that there is sufficient refrigerant circulating in the system so that not all the refrigerant is stored in an evaporator of the indoor unit on a high pressure side, a bypass expansion valve of the standby/shutdown indoor unit will be maintained at a specific opening degree. As a result, when more refrigerant is required for other turned-on indoor units, a heating effect of the turned-on indoor units will be deteriorated due to the bypass of the standby/shutdown indoor units. Similarly, since the opening degree of the bypass expansion valves of the shutdown/standby indoor units cannot be adjusted, the noise of the standby/shutdown indoor units will be overly large, which eventually leads to user complaints.

For this reason, the present disclosure provides a method for controlling a refrigerant flow of a multi-connection air conditioning system, in which the amount of refrigerant in a first indoor unit and a second indoor unit is distributed rationally by dynamically adjusting an actual opening degree of the bypass expansion valve of the standby/shutdown indoor unit, so that the multi-connection air conditioning system can have a higher heating efficiency, and at the same time the noise of the standby/shutdown indoor unit can be reduced.

It should be noted that for executing the method for controlling the refrigerant flow of the multi-connection air conditioning system provided by the present disclosure, the following precondition needs to be satisfied: the multi-connection air conditioning system is turned on and operates in the heating mode. When this precondition is satisfied, referring to FIG. 2, main process steps of the method for controlling the refrigerant flow include:
Step S2: acquiring a refrigerant outlet side temperature T_{zr} of an indoor heat exchanger of a normally heating indoor unit and a refrigerant outlet side temperature T_{gj} of an indoor heat exchanger of a standby/shutdown indoor unit;
Step S3: comparing the refrigerant outlet side temperature T_{zr} of the indoor heat exchanger of the normally heating indoor unit with the refrigerant outlet side temperature T_{gj} of the indoor heat exchanger of the standby/shutdown indoor unit; and
Step S4: selectively increasing or decreasing an opening degree of a bypass expansion valve of the standby/shutdown indoor unit according to a comparison result.

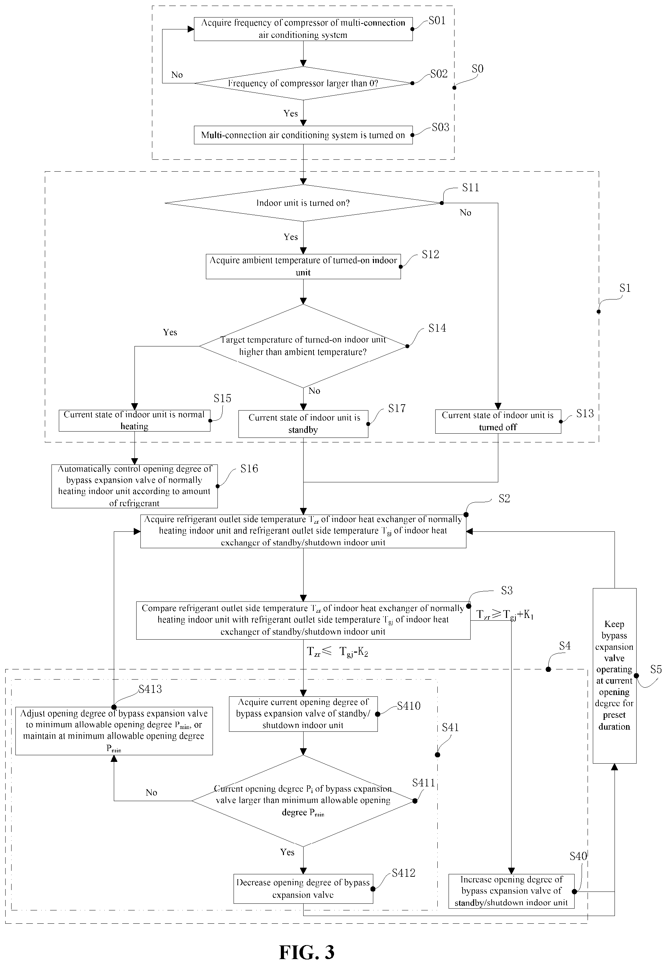

In order to better understand the method for controlling the refrigerant flow, a detailed step flow of the method for controlling the refrigerant flow will be described below in connection with FIG. 3 in an example in which the method is applied to the multi-connection air conditioning system shown in FIG. 1.

As mentioned above, for executing the method for controlling the refrigerant flow, the following precondition needs to be satisfied: the multi-connection air conditioning system is turned on and operates in the heating mode. In order to ensure that this precondition is satisfied, whether the multi-connection air conditioning system is turned on is judged by step S0 in the method for controlling the refrigerant flow. As an example, the specific judging step may include:
Step S01: acquiring a frequency of the compressor CP of the multi-connection air conditioning system; and
Step S02: judging whether the current frequency of the compressor CP is larger than zero;
if the current frequency of the compressor CP is larger than zero, the process first proceeds to step S303 of determining that the multi-connection air conditioning system is turned on, and then the process proceeds to step S1 of continuing to judge the working state of each indoor unit; if the current frequency of the compressor CP is equal to zero, then the process returns to step S01 of acquiring the frequency of the compressor CP of the multi-connection air conditioning system.

After determining that the multi-connection air conditioning system is turned on in step S0, the method for controlling the refrigerant flow judges the current working state of each indoor unit through step S1. With continued reference to FIG. 2, step S1 specifically includes steps S11-S14.

Step S11: judging whether the first indoor unit and the second indoor unit are turned on.

It should be noted that in the present embodiment, it is preferable to judge whether the first indoor unit and the second indoor unit are turned on through a user's instruction received by the multi-connection air conditioning system. In detail, when the user's instruction received by the multi-connection air conditioning system is to turn on, it is determined that the first indoor unit and the second indoor unit are turned on; and if the user's instruction received by the multi-connection air conditioning system is to turn off, it is determined that the first indoor unit and the second indoor unit are turned off. Currently, the user sends corresponding instructions to the multi-connection air conditioning system through on/off buttons of a remote control. Of course, the present disclosure can also judge the on-off state of the indoor unit in any other appropriate way, and the specific way of judging should not constitute a limitation to the present disclosure.

If the first indoor unit and the second indoor unit are turned on, then the process proceeds to step S12 of acquiring an ambient temperature of the turned-on indoor unit; otherwise, the process proceeds to step S13 of determining that the current states of the first indoor unit and the second indoor unit are turned off.

In practice, the ambient temperatures of the first indoor unit and the second indoor unit are usually collected by means of temperature sensors arranged at the respective air inlets. Currently, temperature detection elements such as infrared temperature sensors are commonly used to collect the ambient temperatures, which are then transmitted to a controller of the multi-connection air conditioning system in wired or wireless communication means, etc. Of course, in the present disclosure, the ambient temperature of a specific indoor unit can also be acquired through other sensors arranged at other locations, and the specific acquisition means should not constitute a limitation to the present disclosure.

Step S14: judging whether a target temperature of the turned-on indoor unit is higher than the ambient temperature.

If the target temperature is higher than the ambient temperature, it proves that the ambient temperature has not yet reached a heating target of the user; at this time, the process proceeds to step S15 of determining that the current state of the turned-on indoor unit is normal heating, and then the process proceeds to step S16 of automatically controlling the opening degree of the bypass expansion valve of the normally heating indoor unit according to the amount of refrigerant.

If the target temperature is lower than or equal to the ambient temperature, it proves that the ambient temperature has reached the heating target of the user; at this time, the process proceeds to step S17 of determining that the current state of the turned-on indoor unit is standby.

So far, it is determined that the multi-connection air conditioning system is turned on and operates in the heating mode. Next, in the present embodiment, the method for controlling the refrigerant flow of the multi-connection air conditioning system provided by the present disclosure will be described in detail in an example in which the current state of the first indoor unit is normal heating and the current state of the second indoor unit is standby or shutdown.

With continued reference to FIG. 2, after having determined the current states of the first indoor unit and the second indoor unit in step S1, the method for controlling the refrigerant flow proceeds to step S2 of acquiring the refrigerant outlet side temperature T_{zr} of the first indoor heat exchanger EHi 1 of the normally heating first indoor unit and the refrigerant outlet side temperature T_{gj} of the second indoor heat exchanger EHi2 of the standby/shutdown second indoor unit.

Referring to FIG. 1, a first temperature sensor TCᵢ₁ is arranged at the refrigerant outlet side of the first indoor heat exchanger EHᵢ₁ and is configured to collect the refrigerant outlet side temperature T_{zr} of the first indoor heat exchanger EHᵢ₁, which is transmitted to the controller of the multi-connection air conditioning system in a wired or wireless manner, so that the controller can acquire the refrigerant outlet side temperature T_{zr} of the first indoor heat exchanger EHᵢ₁; similarly, a second temperature sensor TCᵢ₂ is arranged at the refrigerant outlet side of the second indoor heat exchanger EHᵢ₂ and is configured to collect the refrigerant outlet side temperature T_{gj} of the second indoor heat exchanger EHᵢ₂, which is transmitted to the controller of the multi-connection air conditioning system in a wired or wireless manner, so that the controller can acquire the refrigerant outlet side temperature T_{gj} of the second indoor heat exchanger EHᵢ₂. It can be understood by those skilled in the art that in practice, other ways may also be used to acquire the refrigerant outlet side temperatures T_{zr} and T_{gj} according to actual working conditions. The above refrigerant outlet side temperatures T_{zr} and T_{gj} may be calculated based on the detection values of the temperature sensors arranged on the corresponding indoor heat exchangers in combination with a temperature change trend of the refrigerant. Such adjustments do not deviate from the basic principle of the present disclosure, and therefore will also fall within the scope of protection of the present disclosure.

With continued reference to FIG. 2, after step S2 is completed, the process proceeds to step S3 of comparing the refrigerant outlet side temperature T_{zr} of the first indoor heat exchanger EHᵢ₁ of the normally heating first indoor unit with the refrigerant outlet side temperature T_{gj} of the second indoor heat exchanger EHᵢ₂ of the standby/shutdown second indoor unit; and then according to a comparison result, the process proceeds to step S4 of selectively increasing or decreasing the opening degree of the second bypass expansion valve of the standby/shutdown second indoor unit.

In detail, the step S4 of "selectively increasing or decreasing the opening degree of the second bypass expansion valve of the standby/shutdown second indoor unit" in the present embodiment specifically includes:
if the refrigerant outlet side temperature T_{zr} of the first indoor heat exchanger EHi1 of the normally heating first indoor unit is higher than the refrigerant outlet side temperature T_{gj} of the second indoor heat exchanger EHᵢ₂ of the standby/shutdown second indoor unit and the difference reaches a first set threshold K₁, that is, when T_{zr}≥T_{gj}+K₁, it proves that the opening degree of the second bypass expansion valve XVᵢ₂ is too small, so the process proceeds to step S40 of increasing the opening degree of the second bypass expansion valve XVᵢ₂ of the standby/shutdown second indoor unit and then returns to step S2 of acquiring the refrigerant outlet side temperature T_{zr} of the first indoor heat exchanger EHᵢ₁ of the normally heating first indoor unit and the refrigerant outlet side temperature T_{gj} of the second indoor heat exchanger EHᵢ₂ of the standby/shutdown second indoor unit. It should be noted that the magnitude of the first set threshold K₁ depends on the power of the multi-connection air conditioning system and a target control accuracy of the present disclosure, etc. Those skilled in the art can adjust the first set threshold K₁ reasonably according to specific application scenes. For example, for common multi-connection air conditioning systems, K₁ may be 5°C.

Increasing the opening degree of the second bypass expansion valve XVᵢ₂ refers to controlling the second bypass expansion valve XVᵢ₂ to be adjusted by a set number of steps n1 in a direction toward opening. The n1 may be specifically selected according to the characteristics of the second bypass expansion valve XVᵢ₂; for example, an appropriate number of steps can be selected from 1 step to 4 steps.

If the refrigerant outlet side temperature T_{zr} of the first indoor heat exchanger EHᵢ₁ of the normally heating first indoor unit is lower than the refrigerant outlet side temperature T_{gj} of the second indoor heat exchanger EHᵢ₂ of the standby/shutdown second indoor unit and the difference reaches a second set threshold K₂, that is, when T_{zr} ≤T_{gj}-K₂, it proves that the opening degree of the second bypass expansion valve XVᵢ₂ is too large, so the process proceeds to step S41 of decreasing the opening degree of the second bypass expansion valve XVᵢ₂ of the standby/shutdown second indoor unit and then returns to step S2 of acquiring the refrigerant outlet side temperature T_{zr} of the first indoor heat exchanger EHi1 of the normally heating first indoor unit and the refrigerant outlet side temperature T_{gj} of the second indoor heat exchanger EHᵢ₂ of the standby/shutdown second indoor unit. Similarly, the magnitude of the second set threshold K₂ also depends on the power of the multi-connection air conditioning system and the target control accuracy of the present disclosure, etc. Those skilled in the art can adjust the second set threshold K₂ reasonably according to specific application scenes, and the first set threshold K₁ and the second set threshold K₂ may be the same or may not be the same.

Further, in order to avoid the problem that the valve is completely closed when decreasing the opening degree of the second bypass expansion valve XVᵢ₂ in step S41, the step S41 of "decreasing the opening degree of the second bypass expansion valve XVᵢ₂ of the standby/shutdown second indoor unit" in the present embodiment specifically further includes:
Step S410: acquiring the current opening degree of the second bypass expansion valve XVᵢ₂ of the standby/shutdown second indoor unit;
Step S411: judging whether the current opening degree Pi of the second bypass expansion valve XVᵢ₂ is larger than a minimum allowable opening degree Pₘᵢₙ;

If the current opening degree Pᵢ of the second bypass expansion valve XVᵢ₂ is larger than the minimum allowable opening degree Pₘᵢₙ, the process proceeds to step S412 of decreasing the opening degree of the second bypass expansion valve XVᵢ₂, and returns to step S2 of acquiring the refrigerant outlet side temperature T_{zr} of the first indoor heat exchanger EHᵢ₁ of the normally heating first indoor unit and the refrigerant outlet side temperature T_{gj} of the second indoor heat exchanger EHᵢ₂ of the standby/shutdown second indoor unit.

Similarly, decreasing the opening degree of the second bypass expansion valve XVᵢ₂ refers to controlling the second bypass expansion valve XVᵢ₂ to be adjusted by a set number of steps n1 in a direction toward closing. The n1 may be specifically selected according to the characteristics of the second bypass expansion valve XVᵢ₂; for example, an appropriate number of steps can be selected from 1 step to 4 steps. Of course, the present embodiment is not limited to the above example.

With continued reference to FIG. 3, if the current opening degree Pi of the second bypass expansion valve XVᵢ₂ is smaller than the minimum allowable opening degree Pₘᵢₙ, the process proceeds to step S413 of adjusting the opening degree of the second bypass expansion valve XVᵢ₂ to the minimum allowable opening degree Pₘᵢₙ, and return to step S2 of acquiring the refrigerant outlet side temperature T_{zr} of the first indoor heat exchanger EHᵢ₁ of the normally heating first indoor unit and the refrigerant outlet side temperature T_{gj} of the second indoor heat exchanger EHᵢ₂ of the standby/shutdown second indoor unit.

If the current opening degree Pi is equal to the minimum allowable opening degree Pₘᵢₙ, the process proceeds to step S413 of maintaining the opening degree of the second bypass expansion valve XVᵢ₂ at the minimum allowable opening degree Pₘᵢₙ, and returns to step S2 of acquiring the refrigerant outlet side temperature T_{zr} of the first indoor heat exchanger EHᵢ₁ of the normally heating first indoor unit and the refrigerant outlet side temperature T_{gj} of the second indoor heat exchanger EHᵢ₂ of the standby/shutdown second indoor unit.

Further, in order to enable the refrigerant flow control process to run circularly according to a certain period, before returning to step S2, the method for distributing the refrigerant flow of the present embodiment further includes step S5 of keeping the second bypass expansion valve XVᵢ₂ operating at the current opening degree for a preset duration.

For example, after increasing the opening degree of the second bypass expansion valve XVᵢ₂ in step S40, the process proceeds to step S5 of keeping the second bypass expansion valve XVᵢ₂ operating at the current opening degree for a preset duration, and then returns to step S2 to acquire T_{zr} and T_{gj} again, so that the multi-connection air conditioning system enters the next refrigerant flow control process, thus enabling the refrigerant flow control process to run circularly according to a preset period.

Similarly, after decreasing the opening degree of the second bypass expansion valve XVᵢ₂ in step S41, the process proceeds to step S5 of keeping the second bypass expansion valve XVᵢ₂ operating at the current opening degree for a preset duration, and then returns to step S2 to acquire T_{zr} and T_{gj} again, so that the multi-connection air conditioning system enters the next refrigerant flow control process, thus enabling the refrigerant flow control process to run circularly according to a preset period.

It should be noted that in step S5 of keeping the second bypass expansion valve XVᵢ₂ operating at the current opening degree for a preset duration, the setting of the specific value of the duration, i.e., the setting of the refrigerant flow control period, is determined by relevant factors such as the target control accuracy, etc. In practical applications, the specific duration may be preset by those skilled in the art according to the above factors; for example, it may be set to 30 seconds, 2 minutes, 3 minutes, 4 minutes, etc.

It can be understood that the method for controlling the refrigerant flow can be implemented in real time. The method for distributing the refrigerant flow in the present embodiment is preferably executed circularly according to a specific period, so that T_{zr} and T_{gj} are acquired periodically, and then subsequent steps are executed. As such, the refrigerant in the multi-connection air conditioning system can be distributed more reasonably in the bypasses where a plurality of indoor heat exchangers are located, so that the heating efficiency of the multi-connection air conditioning system can be further improved.

To sum up, in the method for controlling the refrigerant flow, according to the actual operating condition of the multi-connection air conditioning system, by automatically adjusting the actual opening degree of the second bypass expansion valve XVᵢ₂ of the second indoor unit in the standby/shutdown state in the system, a dynamic control of the refrigerant flow is completed, thus ensuring a sufficient amount of refrigerant in the normally heating second indoor unit, and therefore improving a heating performance of the air conditioning system.

In addition, in the method for controlling the refrigerant flow, distribution of the refrigerant flow in the system is dynamically controlled, so that the opening degree of the second bypass expansion valve XVᵢ₂ of the standby/shutdown second indoor unit can be controlled to be within in a more reasonable range. As such, the noise of the standby/shutdown second indoor unit can be reduced to a certain extent, so that the user experience can be improved.

It should be noted that as mentioned above, the method for controlling the refrigerant flow of the multi-connection air conditioning system provided by the present disclosure is described herein by only taking the above multi-connection air conditioning system including two indoor units in FIG. 1 as an example. It can be understood that the present embodiment cannot limit the scope of protection of this patent, and the above method for controlling the refrigerant flow of the multi-connection air conditioning system is also applicable to a multi-connection air conditioning system including three, four, five or more indoor units. When the number of the normally heating indoor units is two or more, the above refrigerant outlet side temperature T_{zr} of the indoor heat exchanger of the normally heating indoor unit may be, for example, an average value of the refrigerant outlet side temperatures T_{zr} of a plurality of normally heating indoor units. Similarly, when the number of the standby/shutdown indoor units is two or more, the above refrigerant outlet side temperature T_{gj} of the indoor heat exchanger of the standby/shutdown indoor unit may be, for example, an average value of the refrigerant outlet side temperatures T_{gj} of a plurality of standby/shutdown indoor units. Alternatively, when the number of the normally heating indoor units is two or more, a value may also be selected from the refrigerant outlet side temperatures T_{zr} of a plurality of normally heating indoor units according to a set standard to perform the above comparison operation. Similarly, when the number of the standby/shutdown indoor units is two or more, a value may also be selected from the refrigerant outlet side temperatures T_{gj} of a plurality of standby/shutdown indoor units according to a set standard to perform the above comparison operation. Of course, the above two ways may also be combined, that is, if the number of the normally heating indoor units and the number of the standby/shutdown indoor units are both two or more, when performing the comparison operation, a value is selected from the refrigerant outlet side temperatures T_{zr} of a plurality of normally heating indoor units according to a set standard, but the refrigerant outlet side temperature T_{gj} of the indoor heat exchanger of the standby/shutdown indoor unit is determined as an average value of the refrigerant outlet side temperatures T_{gj} of a plurality of standby/shutdown indoor units; or when performing the comparison operation, a value is selected from the refrigerant outlet side temperatures T_{gj} of a plurality of standby/shutdown indoor units according to a set standard, but the refrigerant outlet side temperature T_{zr} of the indoor heat exchanger of the normally heating indoor unit is determined as an average value of the refrigerant outlet side temperatures T_{zr} of a plurality of normally heating indoor units. These adjustments do not change the basic principle of the present disclosure, and therefore will all fall within the scope of protection of the present disclosure.

In addition, the present disclosure also provides a multi-connection air conditioning system, which includes a controller, and the controller is configured to be capable of executing the above method for controlling the refrigerant flow. It should be noted that the basic functional components constituting the multi-connection air conditioning system and the working principle are basically the same as those in the prior art, and can be realized by those skilled in the art completely based on the prior art, so a repeated description thereof will not be given herein.

Hitherto, the technical solutions of the present disclosure have been described in connection with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features, and all the technical solutions after these changes or replacements will fall within the scope of protection of the present disclosure.

## Claims

1. A method for controlling a refrigerant flow of a multi-connection air conditioning system, the multi-connection air conditioning system comprising an outdoor unit and a plurality of indoor units, wherein the method for controlling the refrigerant flow comprises:
when the multi-connection air conditioning system is turned on and operates in a heating mode, acquiring a refrigerant outlet side temperature T_{zr} of an indoor heat exchanger of a normally heating indoor unit and a refrigerant outlet side temperature T_{gj} of an indoor heat exchanger of a standby/shutdown indoor unit;
comparing the refrigerant outlet side temperature T_{zr} of the indoor heat exchanger of the normally heating indoor unit with the refrigerant outlet side temperature T_{gj} of the indoor heat exchanger of the standby/shutdown indoor unit; and
selectively increasing or decreasing an opening degree of a bypass expansion valve of the standby/shutdown indoor unit according to a comparison result.

2. The method for controlling a refrigerant flow of a multi-connection air conditioning system according to claim 1, wherein the step of "selectively increasing or decreasing an opening degree of a bypass expansion valve of the standby/shutdown indoor unit according to a comparison result" comprises:
if the refrigerant outlet side temperature T_{zr} of the indoor heat exchanger of the normally heating indoor unit is lower than the refrigerant outlet side temperature T_{gj} of the indoor heat exchanger of the standby/shutdown indoor unit and the difference reaches a first set threshold K₁, then decreasing the opening degree of the bypass expansion valve of the standby/shutdown indoor unit, and returning to the step of acquiring T_{zr} and T_{gj}.

3. The method for controlling a refrigerant flow of a multi-connection air conditioning system according to claim 2, wherein the step of "decreasing the opening degree of the bypass expansion valve of the standby/shutdown indoor unit" specifically comprises:
acquiring a current opening degree Pᵢ of the bypass expansion valve of the standby/shutdown indoor unit;
judging whether the current opening degree Pi of the bypass expansion valve is larger than a minimum allowable opening degree Pₘᵢₙ; and
decreasing the opening degree of the bypass expansion valve if the current opening degree Pi is larger than the minimum allowable opening degree Pₘᵢₙ.

4. The method for controlling a refrigerant flow of a multi-connection air conditioning system according to claim 3, wherein the step of "decreasing the opening degree of the bypass expansion valve of the standby/shutdown indoor unit" further comprises:
if the current opening degree Pi is smaller than the minimum allowable opening degree Pₘᵢₙ, then adjusting the opening degree of the bypass expansion valve to the minimum allowable opening degree Pₘᵢₙ, and returning to the step of acquiring T_{zr} and T_{gj}; and
if the current opening degree Pi is equal to the minimum allowable opening degree Pₘᵢₙ, then maintaining the opening degree of the bypass expansion valve at the minimum allowable opening degree Pₘᵢₙ, and returning to the step of acquiring T_{zr} and T_{gj}.

5. The method for controlling a refrigerant flow of a multi-connection air conditioning system according to claim 1, wherein the step of "selectively increasing or decreasing an opening degree of a bypass expansion valve of the standby/shutdown indoor unit according to a comparison result" comprises:
if the refrigerant outlet side temperature T_{zr} of the indoor heat exchanger of the normally heating indoor unit is higher than the refrigerant outlet side temperature T_{gj} of the indoor heat exchanger of the standby/shutdown indoor unit and the difference reaches a second set threshold K₂, then increasing the opening degree of the bypass expansion valve of the standby/shutdown indoor unit, and returning to the step of acquiring T_{zr} and T_{gj}.

6. The method for controlling a refrigerant flow of a multi-connection air conditioning system according to any one of claims 1 to 5, wherein a working state of the indoor unit is judged in the method for controlling the refrigerant flow in the following way:
judging whether the indoor unit is turned on;
acquiring an ambient temperature of the turned-on indoor unit if the indoor unit is turned on; otherwise, determining that the current state of the indoor unit is turned off;
judging whether a target temperature of the turned-on indoor unit is higher than the ambient temperature;
if the target temperature is higher than the ambient temperature, then determining that the current state of the indoor unit is normal heating; and
if the target temperature is lower than or equal to the ambient temperature, then determining that the current state of the indoor unit is standby.

7. The method for controlling a refrigerant flow of a multi-connection air conditioning system according to any one of claims 1 to 5, wherein whether the multi-connection air conditioning system is turned on is judged in the method for controlling the refrigerant flow in the following way:
acquiring a frequency of a compressor of the multi-connection air conditioning system;
judging whether the frequency of the compressor is larger than zero; and
if the frequency of the compressor is larger than zero, then determining that the multi-connection air conditioning system is turned on.

8. The method for controlling a refrigerant flow of a multi-connection air conditioning system according to claim 7, wherein if the frequency of the compressor is equal to zero, then the frequency of the compressor of the multi-connection air conditioning system is acquired again and it is judged whether it is larger than zero.

9. The method for controlling a refrigerant flow of a multi-connection air conditioning system according to any one of claims 2 to 5, further comprising:
keeping the bypass expansion valve operating at the current opening degree for a set duration before returning to the step of acquiring T_{zr} and T_{gj}.

10. A multi-connection air conditioning system, comprising a controller, wherein the controller is configured to be capable of executing the method for controlling a refrigerant flow according to any one of claims 1 to 9.
